(19) Europäisches Patentamt / European Patent Office / Office européen des brevets

(11) **EP 3 677 978 B1**

(12) **EUROPEAN PATENT SPECIFICATION**

(45) Date of publication and mention of the grant of the patent:
**06.04.2022 Bulletin 2022/14**

(21) Application number: **18857990.8**

(22) Date of filing: **21.09.2018**

(51) International Patent Classification (IPC):
*G05D 1/02* *(2020.01)*  *G01C 21/28* *(2006.01)*
*G06T 7/579* *(2017.01)*  *G06F 17/10* *(2006.01)*
*G06T 7/246* *(2017.01)*

(52) Cooperative Patent Classification (CPC):
**G05D 1/0274; G01C 21/28; G05D 1/0246; G05D 1/027; G06T 7/246**

(86) International application number:
**PCT/CN2018/106910**

(87) International publication number:
**WO 2019/057146 (28.03.2019 Gazette 2019/13)**

(54) **DATA PROCESSING METHOD AND DEVICE**

DATENVERARBEITUNGSVERFAHREN UND -VORRICHTUNG

PROCÉDÉ ET DISPOSITIF DE TRAITEMENT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.09.2017 CN 201710868757**

(43) Date of publication of application:
**08.07.2020 Bulletin 2020/28**

(73) Proprietor: **Huawei Technologies Co., Ltd.**
**Longgang District**
**Shenzhen, Guangdong 518129 (CN)**

(72) Inventors:
• **WEN, Feng**
  **Shenzhen**
  **Guangdong 518129 (CN)**
• **XUE, Changliang**
  **Shenzhen**
  **Guangdong 518129 (CN)**
• **FU, Yuxin**
  **Shenzhen**
  **Guangdong 518129 (CN)**

(74) Representative: **Gill Jennings & Every LLP**
**The Broadgate Tower**
**20 Primrose Street**
**London EC2A 2ES (GB)**

(56) References cited:
**CN-A- 102 402 225**  **CN-A- 102 706 342**
**CN-A- 103 631 264**  **CN-A- 103 644 903**
**CN-A- 106 197 428**  **US-A1- 2006 041 331**
**US-A1- 2014 333 741**  **US-A1- 2016 327 395**

## Description

### TECHNICAL FIELD

This application relates to the field of artificial intelligence, and more specifically, to a data processing method and apparatus.

### BACKGROUND

A simultaneous localization and mapping (Simultaneous Localization And Mapping, SLAM) technology is a key capability that a robot relies on to explore an unknown environment. In the absence of environmental prior information, the robot observes characteristics in an environment by using a sensor (for example, a camera or a laser) carried by the robot, and continuously models the environment in a moving process, to estimate system state vectors, namely, environmental characteristic positions and robot poses, and implement mapping and self-localization.

As the robot continuously moves in a scene and a motion scene continuously expands, both a quantity of environmental characteristic positions and a quantity of robot poses continuously increase, resulting in continuous increases in a calculation amount and memory overheads when solving is performed by using a filter or a nonlinear method. This greatly degrades real-time performance of a SLAM process, and even eventually causes a problem that a system cannot normally run.

Currently, a relatively commonly used method is a Schur complement based marginalization method. In a classical SLAM framework, state vectors, namely, robot poses and landmark characteristic points, optimized by a back end are continuously marginalized by using Schur complements, and a new objective function constructed by using marginalized state vectors is used as input for next optimization. However, according to the Schur complement based marginalization method, after the back end performs optimization, the back end needs to optimize all state vectors, and an information matrix needs to be inverted during marginalization of the state vectors. This results in relatively high overheads of calculation resources and calculation time.

Therefore, how to reduce overheads of calculation resources and calculation time in a SLAM state vector estimation process to improve running efficiency of the entire SLAM process has become a problem that urgently needs to be resolved.

US 2014/0333741 relates to constrained key frame localization and mapping for vision-aided inertial navigation.

US 2016/0327395 relates to inverse sliding-window filters for vision-aided inertial navigation systems.

### SUMMARY

This application provides a data processing method. A state vector is marginalized before optimization, to help reduce overheads of calculation resources and calculation time in a SLAM state vector estimation process, thereby improving running efficiency of an entire SLAM process and avoiding a system crash caused by a continuous increase in the state vector.

The invention has been defined in the independent claims. Further technical features of each of these aspects have been defined in the respective dependent claims.

According to a first aspect, a data processing method is provided. The data processing method includes: obtaining a state vector set of an intelligent device, where the state vector set includes at least one pose vector of the intelligent device and/or at least one landmark characteristic vector of an environment in which the intelligent device is located, and the at least one pose vector and/or the at least one landmark characteristic vector are/is used to locate the intelligent device and map the environment in which the intelligent device is located; determining a first linearized constraint equation, where the first linearized constraint equation represents a linearized constraint relationship between the at least one pose vector and/or the at least one landmark characteristic vector; determining a first state vector, where the first state vector is a to-be-marginalized state vector in the state vector set; marginalizing the first state vector in the first linearized constraint equation to obtain a second linearized constraint equation, where the second linearized constraint equation represents a linearized constraint relationship of second state vectors, and the second state vector is a state vector other than the first state vector in the state vector set; determining an objective function for maximum likelihood estimation of the state vector based on the second linearized constraint equation; and optimizing the at least one pose vector and/or the at least one landmark characteristic vector based on the objective function, to output a track of the intelligent device and a map of the environment in which the intelligent device is located.

Therefore, according to the data processing method in this embodiment of this application, the state vector is marginalized before optimization, to help reduce overheads of calculation resources and calculation time in a SLAM state vector estimation process, thereby improving running efficiency of an entire SLAM process and avoiding a system crash caused by a continuous increase in the state vector.

In this embodiment of this application, at least some of the at least one pose vector may be selected as the to-be-marginalized state vector, or at least some of the at least one landmark characteristic vector may be selected as the to-be-marginalized state vector, or at least some of the at least one pose vector and at least some of the at least one landmark characteristic vector may be selected as to-be-marginalized state vectors.

The marginalizing the first state vector in the first linearized constraint equation to obtain a second linearized constraint equation includes: marginalizing the first state vector in the first linearized constraint equation based on a null space of a Jacobian matrix of the first state vector, to obtain the second linearized constraint equation.

Thus, the state vector is marginalized based on the null space, and a non-key state vector is removed from state vectors without losing information, to avoid optimizing all the state vectors. This helps reduce the overheads of calculation resources and calculation time in the SLAM state vector estimation process, thereby improving the running efficiency of the entire SLAM process and avoiding the system crash caused by the continuous increase in the state vector.

With reference to the first aspect, in some implementations of the first aspect, the marginalizing the first state vector in the first linearized constraint equation based on a null space of a Jacobian matrix of the first state vector, to obtain the second linearized constraint equation includes: determining the Jacobian matrix of the first state vector; determining a left null space of the Jacobian matrix of the first state vector based on the Jacobian matrix of the first state vector; and left-multiplying the left null space of the Jacobian matrix of the first state vector by the first linearized constraint equation to obtain the second linearized constraint equation.

In some possible implementations, the left null space of the Jacobian matrix of the first state vector is determined by using the following formula:

$$H_m^{\,T} U_m \;=\; 0 \;,$$

where

$H_m$ is the Jacobian matrix of the first state vector, and $U_m$ is the left null space of the Jacobian matrix of the first state vector.

In some possible implementations, the left null space of the Jacobian matrix of the first state vector is:

$$U_m \;=\; I \;-\; H_m (H_m^{\mathrm{T}} H_m)^{-1} H_m^{\,T} \;,$$

where

I is an identity matrix.

With reference to the first aspect, in some implementations of the first aspect, the second linearized constraint equation is:

$$U_m^{\;\mathrm{T}} \tilde{z} \;\approx\; U_m^{\;\mathrm{T}} H_u \tilde{x}_u \;+\; U_m^{\;\mathrm{T}} n \;,$$

where

$\tilde{x}_u$ is an error vector of the second state vector, $H_u$ is a Jacobian matrix of the second state vector, $U_m$ is the null space of the Jacobian matrix of the first state vector, $\tilde{z}$ is a residual vector of an observed vector, and $n$ is a white Gaussian noise vector.

With reference to the first aspect, in some implementations of the first aspect, before the marginalizing the first state vector in the first linearized constraint equation to obtain a second linearized constraint equation, the method further includes: rearranging the first linearized constraint equation based on the first state vector, where the first state vector in the rearranged first linearized constraint equation is separated from the second state vector in the rearranged first linearized constraint equation.

With reference to the first aspect, in some implementations of the first aspect, the rearranged first linearized constraint equation is:

$$\tilde{z} \;\approx\; H_u \tilde{x}_u \;+\; H_m \tilde{x}_m \;+\; n \;,$$

where

$\tilde{x}_u$ is the error vector of the second state vector, $\tilde{x}_m$ is an error vector of the first state vector, $H_m$ is the Jacobian matrix of the first state vector, $H_u$ is the Jacobian matrix of the second state vector, $\tilde{z}$ is the residual vector of the observed vector, and $n$ is the white Gaussian noise vector.

With reference to the first aspect, in some implementations of the first aspect, the method further includes: determining an information matrix based on the objective function, where the information matrix is a constraint for next data processing.

In some possible implementations, the objective function is:

$$\min_{\tilde{x}_u} \left\| z^{'} - H_u^{'} \tilde{x}_u \right\|_{R^{-1}}^2 ,$$

where

$$z^{'} = U_m^{\mathrm{T}} \tilde{z}, \quad H_u^{'} = U_m^{\mathrm{T}} H_{\mathrm{u}}$$

, and $R$ is a covariance of $U_m^{\mathrm{T}} n$.

With reference to the first aspect, in some implementations of the first aspect, before the determining a first linearized constraint equation of the at least one pose vector and/or the at least one landmark characteristic vector, the method further includes: determining a nonlinearized constraint equation of the at least one pose vector and/or the at least one landmark characteristic vector; and linearizing the nonlinearized constraint equation based on a Jacobian matrix of the at least one pose vector and/or the at least one landmark characteristic vector, to obtain the first linearized constraint equation.

In some possible implementations, the nonlinearized constraint equation is linearly optimized by using a Gauss-Newton method, to obtain the first linearized constraint equation.

In the first aspect, the method further includes: determining an information matrix based on the objective function, where the information matrix is used to optimize and update the second state vector; and constructing a new constraint term based on an optimized and updated second state vector, where the constraint term is used to constrain a linearized constraint equation established during next data processing.

In some possible implementations, the information matrix is:

$$\Sigma = H_u^{'T} R^{-1} H_u^{'} ,$$

where
$\Sigma$ is the information matrix.

In the first aspect, graph optimization is performed on the second state vector, the second state vector is updated as $\hat{x}_u^{\oplus} = \tilde{x}_u + \hat{x}_u$, and a prior constraint for next graph optimization is constructed based on the obtained information matrix, where the prior constraint is:

$$\left\| x_u - \hat{x}_u^{\oplus} \right\|_{\Sigma^{-1}}^2$$

The prior constraint is added to an entire pose graph as a new constraint for next data processing, thereby improving optimization of the entire graph, where
$\tilde{x}_u$ is an error vector of a to-be-preserved state vector, $\hat{x}_u$ is a previous estimate of the to-be-preserved state vector, and
$\hat{x}_u^{\oplus}$ is an updated estimate of the to-be-preserved state vector. According to the data processing method in this embodiment of this application, the state vector is marginalized based on the null space before the objective function is optimized, and the non-key state vector is removed from the state vectors without losing information, to avoid optimizing all the state vectors. This helps reduce the overheads of calculation resources and calculation time in the SLAM state vector estimation process, thereby improving the running efficiency of the entire SLAM process and avoiding the system crash caused by the continuous increase in the state vector.

According to a second aspect, a data processing apparatus is provided. The data processing apparatus is configured to perform any one of the first aspect or the possible implementations of the first aspect. Specifically, the data processing apparatus may include units configured to perform the method according to any one of the first aspect or the possible implementations of the first aspect.

According to a third aspect, a computer readable storage medium is provided. The computer readable storage medium is configured to store a computer program. The computer program includes an instruction for performing the method according to any one of the first aspect or the possible implementations of the first aspect.

According to the embodiments of this application, the state vector is marginalized based on the null space before the objective function is optimized, and the non-key state vector is removed from the state vectors without losing information, to avoid optimizing all the state vectors. This helps reduce the overheads of calculation resources and calculation time in the SLAM state vector estimation process, thereby improving the running efficiency of the entire SLAM process and avoiding the system crash caused by the continuous increase in the state vector.

## BRIEF DESCRIPTION OF DRAWINGS

FIG 1 is a schematic diagram of an application scenario of technical solutions according to embodiments of this application;

FIG 2 is a schematic flowchart of a data processing method according to an embodiment of this application;

FIG 3 is a schematic flowchart of a null-space based marginalization method according to an embodiment of this application;

FIG 4 is another schematic flowchart of a data processing method according to an embodiment of this application;

FIG 5 is another schematic flowchart of a null-space based marginalization method according to an embodiment of this application;

FIG 6 is still another schematic flowchart of a data processing method according to an embodiment of this application;

FIG 7 shows a comparison between a calculation process in a null-space based marginalization method according to an embodiment of this application and a calculation process in a Schur complement based marginalization method;

FIG 8 is a schematic block diagram of a data processing apparatus according to an embodiment of this application; and

FIG 9 is another schematic block diagram of a data processing apparatus according to an embodiment of this application.

## DESCRIPTION OF EMBODIMENTS

To make the objectives, technical solutions, and advantages of this disclosure clearer, the following further describes the implementations of this disclosure in detail with reference to the accompanying drawings. The implementations described below are not all claimed, they are included to help understanding the context of the invention. While the description often refers to embodiments, the embodiments of the invention are those which comprise at least all the features of an independent claim. Any embodiment which does not fall within the scope of the claims does not form part of the invention, but rather included as an illustrative example that is useful for understanding the invention.

Before the technical solutions in the embodiments of this application are described, definitions of several key terms are described first.

Null space: It is known that A is an m×n matrix. A null space (nullspace), also referred to as a kernel (kernel), of A is a set of n-dimensional vectors defined by the following formula:

$$\ker(A) = \{ \mathbf{x} \in \mathbb{C}^n : A\mathbf{x} = \mathbf{0} \}$$

In other words, the null space is a set of all solutions x of the linear equation Ax=0.

Jacobian matrix: A Jacobian matrix is a matrix including first-order partial derivatives that are arranged in a specific manner. It is assumed that there is a function group including m n-variable functions, $y_i(x_1, x_2, \ldots x_n)$ (i=1, 2, ... m), which is referred to as a function group. A first-order derivative is calculated for the function group, to obtain the following Jacobian matrix:

$$J = \begin{bmatrix} \dfrac{\partial y_1}{\partial x_1} & \dfrac{\partial y_1}{\partial x_2} & \cdots & \dfrac{\partial y_1}{\partial x_n} \\ \dfrac{\partial y_2}{\partial x_1} & \dfrac{\partial y_2}{\partial x_2} & \cdots & \dfrac{\partial y_2}{\partial x_n} \\ \vdots & \vdots & & \vdots \\ \dfrac{\partial y_m}{\partial x_1} & \dfrac{\partial y_m}{\partial x_2} & \cdots & \dfrac{\partial y_m}{\partial x_n} \end{bmatrix}_{m \times n}$$

The embodiments of this application are applicable to the field of simultaneous localization and mapping (Simultaneous Localization And Mapping, SLAM) and any intelligent device (Intelligent Equipment) used for state marginalization in a nonlinear estimation problem.

It should be understood that an intelligent device is any device, instrument, or machine that has a calculation processing capability. An intelligent device in the embodiments of this application may be a robot (Robot), an autonomous vehicle (Autonomous Vehicles), an unmanned aerial vehicle (Unmanned Aerial Vehicle), a smart household (Smart Home), a mobile phone terminal, or the like. This application does not impose any limitation on the intelligent device.

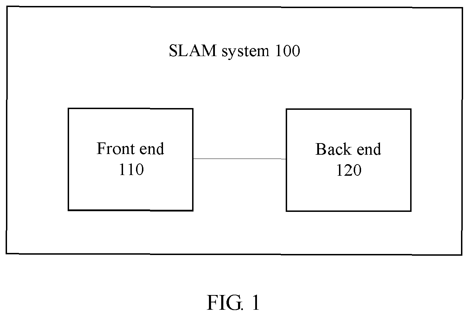

FIG 1 is a schematic diagram of an application scenario of the technical solutions in the embodiments of this application. As shown in FIG 1, the technical solutions in the embodiments of this application are applicable to a SLAM system 100 of a robot. The SLAM system includes a front end (Front-end) 110 and a back end (Back-end) 120. The front end 110 is mainly for implementing data acquisition of a sensor and data association, and a main function of the back end 120 is to perform parameter estimation and optimization on a model generated by the front end. The following describes the technical solutions in the embodiments of this application by using the robot as an example.

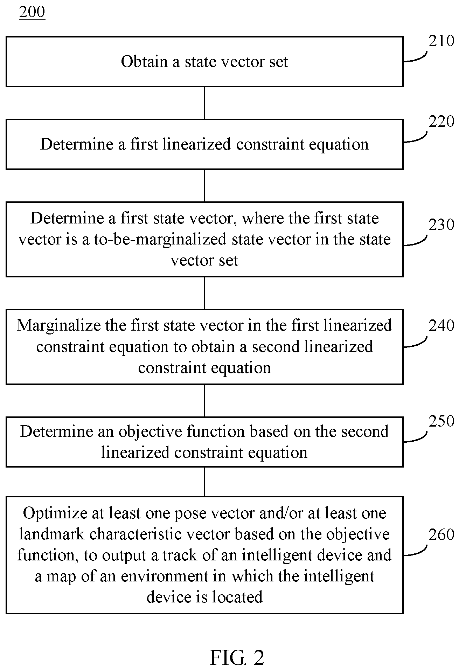

FIG 2 is a schematic flowchart of a data processing method 200 according to an embodiment of this application. As shown in FIG 2, the method 200 may be performed by the SLAM system 100 in FIG 1, and the method 200 includes the following steps.

S210: Obtain a state vector set of an intelligent device, where the state vector set includes at least one pose vector of the intelligent device and/or at least one landmark characteristic vector of an environment in which the intelligent device is located, and the at least one pose vector and/or the at least one landmark characteristic vector are/is used to locate the intelligent device and map the environment in which the intelligent device is located.

Specifically, the front end 110 in the SLAM system 100 of the robot obtains data from a visual sensor and an inertial sensor IMU, extracts at least one pose vector of the robot, performs time synchronization on an obtained image and obtained IMU data, extracts, from visual image information, at least one landmark characteristic vector of an environment in which the robot is located, and performs characteristic matching.

It should be understood that characteristic matching means determining which of image data obtained at two different times corresponds to a same landmark characteristic.

For example, the robot generates a track $(x_1, x_2, \ldots, x_k)$ in a moving process. Because motion of the robot conforms to a specific kinematic model law, a motion equation of the robot is established based on the IMU data and a motion model, and the motion equation is:

$$x_k = f_k(x_{k-1}, u_k) + w_k \qquad (1)$$

where $u_k$ is an observed value from a motion sensor such as an odometer or an inertial measurement unit (Inertial Measurement Unit, IMU), and $w_k$ is white Gaussian noise with a covariance $Q_k$.

It should be understood that the visual sensor extracts the landmark characteristic vector, but the visual sensor can calculate a pose vector of the robot by using data of a previous frame and a current frame, and the inertial sensor extracts the pose vector of the robot.

For another example, there are many landmarks in a motion scene of the robot, and at each position in the moving process, the robot measures a specific landmark point by using a sensor, and obtains a corresponding observed value. Further, the robot detects and tracks a characteristic based on an observation model, and the foregoing extracted landmark characteristic vector, the observation model, and a pose obtained through optimization of the previous frame are used as prior information, to establish an observation equation of the robot:

$$z_{kj} = h_{kj}(x_k, x_{fj}) + v_{kj} \qquad )2)$$

where $Z_{kj}$ is an observed value for a characteristic $x_{fj}$ when the robot is in a pose $X_k$, and $V_{kj}$ is white Gaussian noise with a covariance $R_k$.

It should be understood that in S210, the state vector set may be obtained by the front end 110 in the SLAM system 100 in FIG 1.

It should be further understood that noise meets Gaussian distribution $N(0, \sigma^2)$, where 0 represents a mean, and $\sigma^2$ represents a variance. $Q_k$ is a variance of noise corresponding to a specific motion equation, and $R_k$ is a variance of noise corresponding to a specific observation equation.

S220: Determine a first linearized constraint equation, where the first linearized constraint equation represents a linearized constraint relationship between the at least one pose vector and/or the at least one landmark characteristic vector.

Specifically, the at least one pose vector of the robot and/or the at least one landmark characteristic vector of the environment in which the robot is located are/is obtained in S210; the established motion equation (1) and the established observation equation (2) are nonlinearized equations of the at least one pose vector and/or the at least one landmark characteristic vector; and the nonlinearized equations are linearized based on a Jacobian matrix of the at least one pose vector and/or the at least one landmark characteristic vector.

It should be understood that constructing a linear constraint equation is mainly to convert a nonlinearized constraint representation of a state vector into a linearized mathematical expression to simplify a solving process.

It should be further understood that in S220, the first linearized constraint equation of the at least one pose vector and/or the at least one landmark characteristic vector may be determined by the back end 120 in the SLAM system 100.

Jacobian matrices $F_k$, $H_{kj}$, and $H_{fj}$ of the motion equation (1) and the observation equation (2) in constraint equations are calculated respectively as follows:

$$F_k = \frac{\partial f_k}{\partial x_k}, \quad H_{kj} = \frac{\partial h_{kj}}{\partial x_k},$$

and

$$H_{fj} = \frac{\partial h_{kj}}{\partial x_{fj}} \quad (3)$$

where $F_k$ is a Jacobian matrix of a robot pose in a state k in the motion model, and $H_{kj}$ and $H_{fj}$ are respectively Jacobian matrices of a robot pose vector and a landmark characteristic vector in the state k in the observation equation.

The constraint equation is linearized based on the Jacobian matrix, to obtain the first linearized constraint equation:

linearized motion equation:

$$\tilde{x}_k \approx F_{k-1}\tilde{x}_{k-1} + w_k \qquad (4)$$

linearized observation equation:

$$\tilde{z}_{kj} \approx H_{kj}\tilde{x}_k + H_{fj}\tilde{x}_{fj} + v_{kj} \quad (5)$$

S230: Determine a first state vector, where the first state vector is a to-be-marginalized state vector in the state vector set.

Specifically, based on a current SLAM application scenario, one of the pose vector of the robot and the landmark characteristic vector may be selected as a specific to-be-marginalized state vector, or both of the pose vector and the landmark characteristic vector may be used as to-be-marginalized state vectors.

It should be understood that the linearized constraint equation is rearranged by using a determined to-be-optimized state vector, to prepare for a subsequent marginalization operation.

It should be further understood that in S230, the first state vector may be determined by the back end 120 in the SLAM system 100.

For example, a sliding window method may be used, to use a point in a window as an actually to-be-marginalized point, where the point is earlier than a current state point of the robot by a relatively long time. First, a size of a sliding window is set to D (which is executed only during system initialization), and a pose vector and all landmark characteristic vectors at a moment (k-D) that are observed in a current window are used as to-be-marginalized state vectors.

For another example, a parallax method may be used, to use a point with a relatively small observation parallax from a current state point of the robot, as an actually to-be-marginalized point.

It should be understood that actually, S220 and S230 are performed in no particular order. The first linearized constraint equation may be determined before the to-be-marginalized state vector is determined, or the to-be-marginalized state vector may be determined before the first linearized constraint equation is determined. This is not limited in this application.

S240: Marginalize the first state vector in the first linearized constraint equation to obtain a second linearized constraint equation, where the second linearized constraint equation represents a linearized constraint relationship of second state vectors, and the second state vector is a state vector other than the first state vector in the state vector set.

Optionally, before the marginalizing the first state vector in the first linearized constraint equation to obtain a second linearized constraint equation of a second state vector, the method further includes:
rearranging the first linearized constraint equation based on the first state vector, where the first state vector in the rearranged first linearized constraint equation is separated from the second state vector in the rearranged first linearized constraint equation.

For example, the pose vector and all the landmark characteristic vectors at the moment (k-D) that are observed in the current window are determined as the to-be-marginalized state vectors in S230. The linearized constraint equation established in step S220 is rearranged, and the to-be-marginalized state vectors are separated from other state vectors in the linearized constraint equation, to obtain the arranged first linearized constraint equation (6):

$$
\begin{bmatrix} 0 \\ \vdots \\ 0 \\ \tilde{z}_{k1} \\ \vdots \\ \tilde{z}_{kj} \end{bmatrix} = \begin{bmatrix} 1 & -F_{k-1} & 0 & 0 & \cdots & 0 \\ 0 & 1 & -F_{k-2} & 0 & \cdots & 0 \\ \vdots & \vdots & \vdots & \vdots & \cdots & \vdots \\ 0 & 0 & 0 & 0 & \cdots & 1 \\ H_{k1} & 0 & 0 & 0 & \cdots & 0 \\ \vdots & \vdots & \vdots & \vdots & \cdots & \vdots \\ H_{kj} & 0 & 0 & 0 & \cdots & 0 \end{bmatrix} \begin{bmatrix} \tilde{x}_k \\ \tilde{x}_{k-1} \\ \vdots \\ \tilde{x}_{k-D+1} \end{bmatrix} + \begin{bmatrix} 0 & 0 & \cdots & 0 \\ \vdots & \vdots & \cdots & \vdots \\ -F_{k-D} & 0 & \cdots & 0 \\ 0 & H_{f1} & \cdots & 0 \\ \vdots & \vdots & \cdots & \vdots \\ 0 & 0 & \cdots & H_{fj} \end{bmatrix} \begin{bmatrix} \tilde{x}_{k-D} \\ \tilde{x}_{f1} \\ \vdots \\ \tilde{x}_{fj} \end{bmatrix} + \begin{bmatrix} -w_k \\ \vdots \\ -w_{k-D} \\ v_{k1} \\ \vdots \\ v_{kj} \end{bmatrix}
$$

$$(6)$$

The rearranged first linearized constraint equation is denoted as:

$$ \tilde{z} \approx H_u \tilde{x}_u + H_m \tilde{x}_m + n \qquad )7) $$

where $\tilde{x}_u$ is an error vector of a to-be-preserved state vector, $H_u$ is a Jacobian matrix of the to-be-preserved state vector, $\tilde{x}_m$ is an error vector of a to-be-marginalized state vector, $H_m$ is a Jacobian matrix of the to-be-marginalized state vector, $\tilde{z}$ is a residual vector of an observed vector, and $n$ is a white Gaussian noise vector.

It should be understood that there is a difference between the first state vector and an error vector of the first state vector, and there is also a difference between the second state vector and an error vector of the second state vector. Separation of $\tilde{x}_u$ from $\tilde{x}_m$ in the rearranged first linearized constraint equation may also be understood as separation of the first state vector from the second state vector.

It should be further understood that in S240, the second linearized constraint equation may be determined by the back end 120 in the SLAM system 100.

In this embodiment of this application, to keep a SLAM state vector bounded, state vector data needs to be limited, to reduce calculation overheads and calculation time. Therefore, the state vector is marginalized before optimization, and a non-key state vector is determined in the state vector set, to avoid optimizing all the state vectors. The second linearized constraint equation of the second state vector is obtained by marginalizing the to-be-marginalized state vector in the first linearized constraint equation, so that only a required state vector is preserved in the second linearized constraint equation.

Optionally, the marginalizing the first state vector in the first linearized constraint equation to obtain a second linearized constraint equation of a second state vector includes:

marginalizing the first state vector in the first linearized constraint equation based on a null space of a Jacobian matrix of the first state vector, to obtain the second linearized constraint equation.

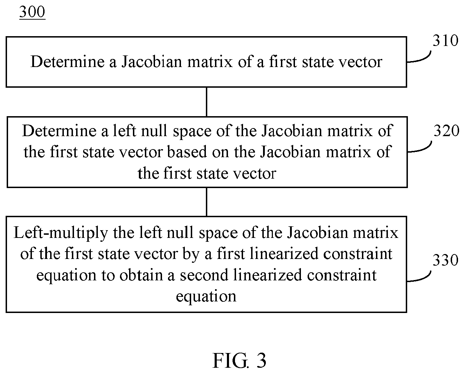

FIG 3 is a schematic flowchart of a null-space based marginalization method 300 according to an embodiment of this application. As shown in FIG 3, the null-space based marginalization method 300 may be performed by the back end 120 in the SLAM system in FIG 1, and the method 300 includes the following steps.

S310: Determine the Jacobian matrix of the first state vector.

Specifically, $H_m$ in the formula (7) is the Jacobian matrix of the to-be-marginalized state vector.

S320: Determine a left null space of the Jacobian matrix of the first state vector based on the Jacobian matrix of the first state vector.

Specifically, a left null space of the Jacobian matrix of the to-be-marginalized state vector is calculated, and a left null space $U_m$ corresponding to $H_m$ is solved based on the linearized constraint equation (7). A solving equation is:

$$H_m^T U_m = 0 \quad (8)$$

An analytical solution manner is provided to solve the left null space, and an analytical solution of $U_m$ is expressed as:

$$U_m = I - H_m (H_m^T H_m)^{-1} H_m^T \quad (9)$$

S330: Left-multiply the left null space of the Jacobian matrix of the first state vector by the first linearized constraint equation to obtain the second linearized constraint equation.

Specifically, the left null space $U_m$ obtained through calculation is left-multiplied by the rearranged first linearized constraint equation, and an equation is as follows:

$$U_m^T \tilde{z} \approx U_m^T H_u \tilde{x}_u + U_m^T H_m \tilde{x}_m + U_m^T n \quad (10)$$

$H_m^T U_m = 0$, and therefore, the finally obtained second linearized constraint equation is:

$$U_m^T \tilde{z} \approx U_m^T H_u \tilde{x}_u + U_m^T n \quad (11)$$

According to the null-space based marginalization method in this embodiment of this application, a non-key state vector is removed from state vectors based on the null space of the to-be-marginalized state vector, to help reduce calculation time.

S250: Determine an objective function for maximum likelihood estimation of the state vector based on the second linearized constraint equation.

It should be understood that maximum likelihood estimation (Maximum Likelihood, ML), also referred to as maximum probability estimation, is a theoretical point estimation method. A basic idea of the method is that after n sets of sample observed values are randomly extracted from a model, a most proper parameter estimator should make a probability of extracting the n sets of sample observed values from the model highest.

Specifically, based on the newly constructed second linearized constraint equation, the newly to-be-optimized objective function can be constructed for optimization performed by the back end 120 in the SLAM system 100. Specifically, the to-be-optimized objective function is constructed based on the reduced second linearized constraint equation that is newly constructed, to obtain:

$$\min_{\tilde{x}_u} \left\| z' - H_u' \tilde{x}_u \right\|_{R^{-1}}^2 \quad (12)$$

where $z' = U_m^T \tilde{z}$, $H_u' = U_m^T H_u$, and $R$ is a covariance of $U_m^T n$.

Optionally, the data processing method 100 further includes:

Optionally, the method further includes:

determining an information matrix based on the objective function, where the information matrix is used to optimize and update the second state vector; and constructing a new constraint term based on the optimized and updated second state vector, where the constraint term is used to constrain a linearized constraint equation established during next data processing.

Specifically, after the formula (12) is obtained, a marginalized information matrix is calculated based on the formula (12), to obtain:

$$\Sigma = H_u'^{T} R^{-1} H_u' \qquad (13)$$

Specifically, based on the objective function, an optimal value of the second state vector is estimated by using a graph optimization method, and the information matrix is determined, where both the optimal value and the information matrix are used as constraints for next data processing.

S260: Optimize the at least one pose vector and/or the at least one landmark characteristic vector based on the objective function, to output a track of the intelligent device and a map of the environment in which the intelligent device is located.

Specifically, based on the reduced objective function, optimal estimation and optimization are performed on all state vectors (the pose vector of the robot and the landmark characteristic vector of the environment in which the robot is currently located) by using an extended Kalman filter (Extended Kalman Filter, EKF) method or a nonlinear optimization method, to obtain a track of the robot and a map of the environment in which the robot is located. Graph optimization is performed on the second state vector, the second state vector is updated as $\hat{X}_u^{\oplus} = \tilde{X}_u + \hat{X}_u$ , and a prior constraint for next graph optimization is constructed based on the obtained information matrix, where the prior constraint is:

$$\left\| X_u - \hat{x}_u^{\oplus} \right\|_{\Sigma^{-1}}^{2} \qquad (14)$$

The prior constraint is added to an entire pose graph as a new constraint for next optimization, thereby improving optimization of the entire graph, where $\tilde{x}_u$ is an error vector of a to-be-preserved state vector, $\hat{x}_u$ is a previous estimate of the to-be-preserved state vector, and $\hat{X}_u^{\oplus}$ is an updated estimate of the to-be-preserved state vector. According to the data processing method in this embodiment of this application, the state vector is marginalized based on the null space before the objective function is optimized, and the non-key state vector is removed from the state vectors without losing information, to avoid optimizing all the state vectors. This helps reduce overheads of calculation resources and calculation time in a SLAM state vector estimation process, thereby improving running efficiency of an entire SLAM process and avoiding a system crash caused by a continuous increase in the state vector.

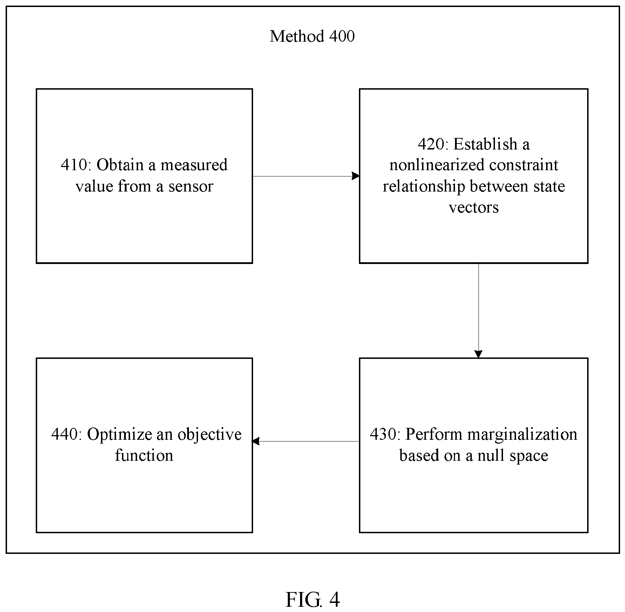

In a specific embodiment, FIG. 4 is a schematic flowchart of a data processing method 400 according to an embodiment of this application. As shown in FIG. 4, the method 400 includes the following steps.

S410: Obtain a measured value from a sensor.

Information is collected from sensors such as a camera and an IMU, image information in the camera is predicted, and data in the sensors such as the camera and the IMU is synchronized, to obtain an observed state variable of a current pose of an intelligent device.

S420: Establish a nonlinearized constraint relationship between state vectors.

A constraint relationship between sensor data of adjacent frames is established by using the foregoing motion equation (1) and observation equation (2), and a nonlinearized constraint relationship between all state vectors is further established through transfer of the constraint relationship.

S430: Perform marginalization based on a null space.

The nonlinearized constraint relationship between all the state vectors that is established in S420 is linearized, a non-key state vector is removed from the state vectors by using a left null space, and a to-be-optimized objective function is constructed based on a constraint of a to-be-preserved state vector.

S440: Optimize the objective function obtained through processing in S430.

Based on a reduced objective function, optimal estimation and optimization are performed on all state vectors by using an EKF method or a nonlinear optimization method, to obtain a track and a map that are globally consistent.

It should be understood that S410 and S420 may be processed by the front end 110 in the SLAM system 100, and S430 and S440 may be processed by the back end 120 in the SLAM system 100.

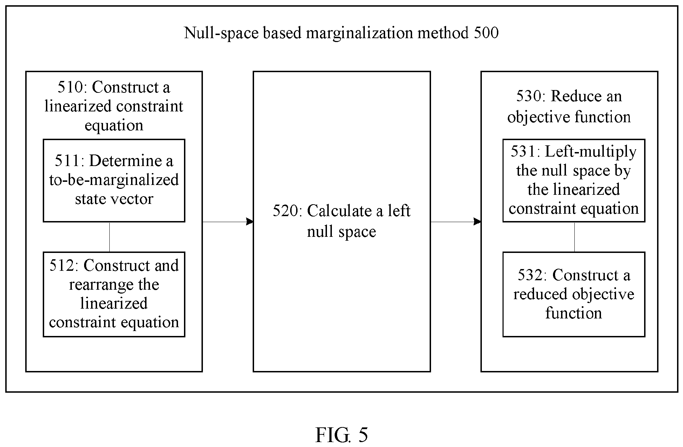

In another specific embodiment, FIG. 5 is a schematic flowchart of a null-space based marginalization method 500 according to an embodiment of this application. As shown in FIG. 5, the method 500 includes the following steps.

S510: Construct a linearized constraint equation.

Constructing a linear constraint equation is mainly to convert a nonlinearized constraint representation of a state vector into a linearized mathematical expression to simplify a solving process. In addition, the linearized constraint equation is rearranged by using a determined to-be-optimized state vector, to prepare for a subsequent marginalization operation. This mainly includes the following two steps.

S511: Determine a to-be-marginalized state vector.

Based on an application scenario of a current SLAM process, whether to marginalize a pose vector of an intelligent device or a landmark characteristic vector of an environment in which the intelligent device is located is determined, and which pose vector or landmark characteristic vector is to be marginalized is also determined.

S512: Construct and rearrange the linearized constraint equation.

A Jacobian matrix of the state vector is calculated, the linearized constraint equation of the state vector is constructed by using the Jacobian matrix, and the linearized equation is rearranged based on the determined to-be-marginalized state vector.

S520: Calculate a left null space.

Calculating the left null space is mainly to complete a calculation operation on the left null space of a Jacobian matrix of the to-be-marginalized state vector.

S530: Reduce an objective function.

Reducing the objective function is mainly to left-multiply the null space by the linearized equation to remove a non-key state vector from the linearized constraint equation, to obtain a marginalized linearized constraint equation, and a newly to-be-optimize objective function is constructed based on the marginalized linearized equation. This mainly includes the following two steps.

S531: Left-multiply the null space by the linearized constraint equation.

The null space of the Jacobian matrix of the to-be-marginalized state vector is left-multiplied by the linearized constraint equation to remove the non-key state vector from the linearized equation.

S532: Construct a reduced objective function.

After the non-key state vector is removed, a new constraint representation of a state vector is obtained, and the new to-be-optimize objective function is constructed based on the new constraint representation.

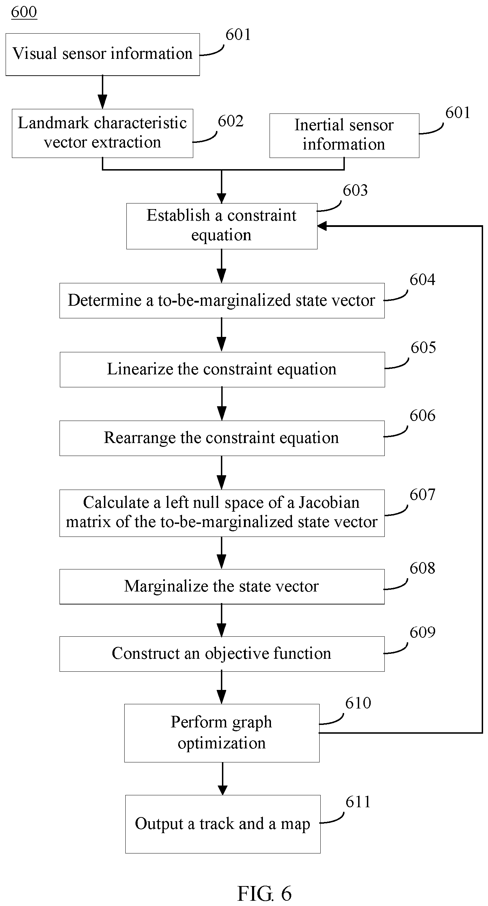

In a specific embodiment, FIG. 6 is a schematic flowchart of a data processing method 600 according to an embodiment of this application. As shown in FIG. 6, the method 600 includes the following steps.

S601: Obtain data from a visual sensor and an inertial sensor IMU, and perform time synchronization on an obtained image and obtained IMU data.

S602: Extract an environment landmark characteristic vector from visual image information, and perform characteristic matching.

S603: Establish a nonlinearized constraint equation of the at least one pose vector and/or at least one landmark characteristic vector, where the constraint equation includes a motion equation and an observation equation; the motion equation of an intelligent device is established based on the IMU data in S601 and a motion model; and the observation equation is established based on the landmark characteristic vector extracted in S602, an observation model, and a pose obtained through optimization of a previous frame that are used as prior information.

S604: Determine a to-be-marginalized state vector, to be specific, determine the to-be-marginalized state vector in the pose vector and the landmark characteristic vector by using a sliding window method or a parallax method.

S605: Linearize the nonlinearized constraint equation established in S603, to be specific, calculate Jacobian matrices of the motion equation and the observation equation in S603, and linearize the nonlinearized constraint equation in S603 based on the Jacobian matrices to obtain a first linearized constraint equation.

S606: Rearrange the linearized constraint equation established in S605, and separate the to-be-marginalized state vector from other state vectors in the linearized constraint equation, to be specific, rearrange, based on the to-be-marginalized state vector determined in S604, the first linearized constraint equation established in S605, and separate a to-be-preserved state vector in the first linearized constraint equation from the to-be-marginalized state vector in the first linearized constraint equation.

S607: Calculate a left null space of a Jacobian matrix of the to-be-marginalized vector, to be specific, calculate the left null space of the to-be-marginalized state vector based on a rearranged first linearized constraint equation obtained in S606.

S608: Marginalize the state vector, and determine a reduced linearized constraint equation, to be specific, left-multiply the left null space of the to-be-marginalized state vector obtained through calculation in S607, by the rearranged first linearized constraint equation obtained in S606, to obtain a reduced second linearized constraint equation.

S609: Construct an objective function based on the reduced second linearized constraint equation determined in S608, and calculate a marginalized information matrix.

S610: Perform graph optimization on the objective function, and construct, based on the information matrix obtained in S609, a prior constraint for next optimization.

S611: If a SLAM process ends, output all poses of the intelligent device and a map of an environment in which the intelligent device is located; or if a SLAM process does not end, perform steps S601 to S610 cyclically.

Table 1 shows a calculation time comparison between a Schur complement based marginalization method and a null-space based marginalization method according to an embodiment of this application. It can be learned from Table 1 that running efficiency of the null-space based marginalization method is 4.6 times that of the Schur complement based marginalization method.

**Table 1**

| Marginalization algorithm | Average running time (s) |
| --- | --- |
| Schur complement based marginalization algorithm | 0.0440574 |
| Null-space based marginalization algorithm | 0.00953969 |

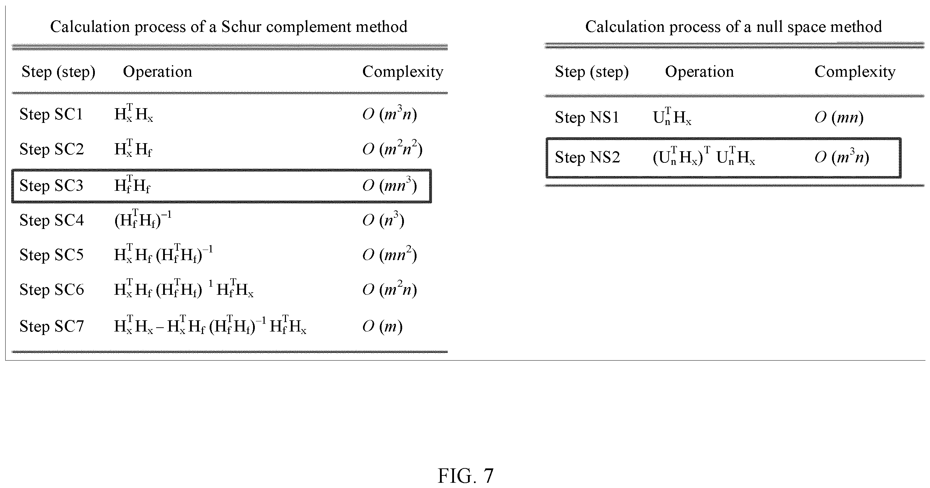

FIG. 7 shows a calculation step comparison between a null space method according to an embodiment of this application and a Schur complement method. As shown in FIG. 7, calculation complexity of the two methods is compared and analyzed. It is assumed that n landmark characteristics are tracked for m robot poses. Black boxes represent steps that are most time consuming in the two marginalization methods. Usually, n is much greater than m. It can be learned that calculation complexity of the null space method is less than that of the Schur complement method.

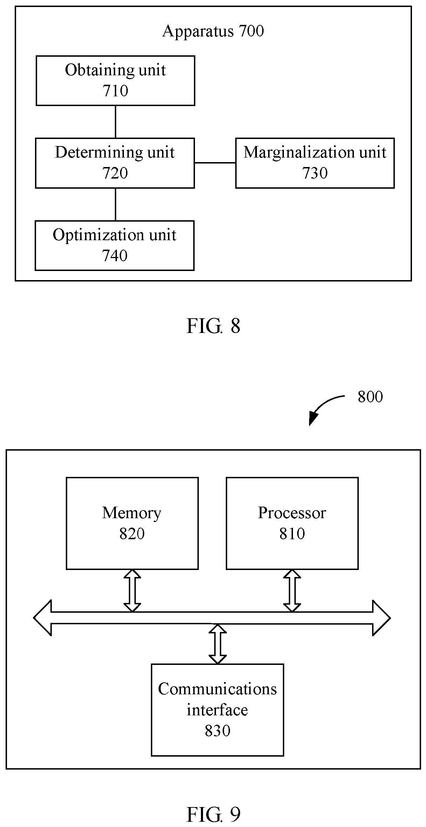

The foregoing describes the data processing methods in the embodiments of this application in detail with reference to FIG. 2 to FIG. 7. The following describes data processing apparatuses in embodiments of this application with reference to FIG. 8 and FIG. 9.

FIG. 8 is a schematic block diagram of a data processing apparatus 700 according to an embodiment of this application. As shown in FIG. 8, the apparatus 700 includes:

an obtaining unit 710, configured to obtain a state vector set of an intelligent device, where the state vector set includes at least one pose vector of the intelligent device and/or at least one landmark characteristic vector of an environment in which the intelligent device is located, and the at least one pose vector and/or the at least one landmark characteristic vector are/is used to locate the intelligent device and map the environment in which the intelligent device is located;

a determining unit 720, configured to determine a first linearized constraint equation, where the first linearized constraint equation represents a linearized constraint relationship between the at least one pose vector and/or the at least one landmark characteristic vector, where

the determining unit 720 is further configured to determine a first state vector, where the first state vector is a to-be-marginalized state vector in the state vector set;

a marginalization unit 730, configured to marginalize the first state vector in the first linearized constraint equation to obtain a second linearized constraint equation, where the second linearized constraint equation represents a linearized constraint relationship of second state vectors, and the second state vector is a state vector other than the first state vector in the state vector set, where

the determining unit 720 is further configured to determine an objective function for maximum likelihood estimation of the state vector based on the second linearized constraint equation; and

an optimization unit 740, configured to optimize the at least one pose vector and/or the at least one landmark characteristic vector based on the objective function, to output a track of the intelligent device and a map of the environment in which the intelligent device is located.

Optionally, the marginalization unit 730 is specifically configured to:
marginalize the first state vector in the first linearized constraint equation based on a null space of a Jacobian matrix of the first state vector, to obtain the second linearized constraint equation.

Optionally, the marginalization unit is specifically configured to:

determine the Jacobian matrix of the first state vector;
determine a left null space of the Jacobian matrix of the first state vector based on the Jacobian matrix of the first state vector; and

left-multiply the left null space of the Jacobian matrix of the first state vector by the first linearized constraint equation to obtain the second linearized constraint equation.

Optionally, the second linearized constraint equation is:

$$U_m{}^{\mathrm{T}}\tilde{z} \approx U_m{}^{\mathrm{T}}H_u\tilde{x}_u + U_m{}^{\mathrm{T}}n,$$

where
$\tilde{x}_u$ is an error vector of the second state vector, $H_u$ is a Jacobian matrix of the second state vector, $U_m$ is the null space of the Jacobian matrix of the first state vector, $\tilde{z}$ is a residual vector of an observed vector, and $n$ is a white Gaussian noise vector.

Optionally, the apparatus 700 further includes:
a rearrangement unit, configured to rearrange the first linearized constraint equation based on the first state vector, where the first state vector in the rearranged first linearized constraint equation is separated from the second state vector in the rearranged first linearized constraint equation.

Optionally, the rearranged first linearized constraint equation is:

$$\tilde{z} \approx H_u\tilde{x}_u + H_m\tilde{x}_m + n$$

, where
$\tilde{x}_u$ is the error vector of the second state vector, $\tilde{x}_m$ is an error vector of the first state vector, $H_m$ is the Jacobian matrix of the first state vector, $H_u$ is the Jacobian matrix of the second state vector, $\tilde{z}$ is the residual vector of the observed vector, and $n$ is the white Gaussian noise vector.

Optionally, the determining unit 720 is further configured to:
determine an information matrix based on the objective function, where the information matrix is a constraint for next data processing.

Optionally, the determining unit is further configured to:

determine a nonlinearized constraint equation of the at least one pose vector and/or the at least one landmark characteristic vector; and
linearize the nonlinearized constraint equation based on a Jacobian matrix of the at least one pose vector and/or the at least one landmark characteristic vector, to obtain the first linearized constraint equation.

The determining unit 720 is further configured to:
determine an information matrix based on the objective function, where the information matrix is used to optimize and update the second state vector; and construct a new constraint term based on the optimized and updated second state vector, where the constraint term is used to constrain a linearized constraint equation established during next data processing.

It should be understood that the data processing apparatus 700 may correspond to the SLAM system in the data processing method 200 in the embodiment of this application. The data processing apparatus 700 may include modules configured to perform the method performed by the SLAM system in the data processing method 200 in FIG. 2. Moreover, the modules in the data processing apparatus 700 and the foregoing and other operations and/or functions are respectively used for implementing corresponding procedures in the data processing method 200 in FIG. 2. Specifically, the obtaining unit 710 is configured to perform step 210 in the method 200; the determining unit 720 is configured to perform steps 220, 230, and 250 in the method 200; the marginalization unit 730 is configured to perform step 240 in the method 200; and the optimization unit 740 is configured to perform step 260 in the method 200. Specific processes of performing the corresponding steps by the units are already described in detail in the method 200. For brevity, details are not described herein again.

FIG. 9 is a schematic structural diagram of a data processing apparatus 800 according to an embodiment of this application. As shown in FIG 9, the data processing apparatus 800 includes a processor 810, a memory 820, and a communications interface 830. The memory 820 stores an instruction, and the processor 810 is configured to execute the instruction in the memory 820. When the instruction is executed, the processor 510 is configured to perform the method provided in the foregoing method embodiment. The processor 810 is further configured to control the communications interface 830 to communicate with the outside.

Specifically, the data processing apparatus 800 may correspond to the SLAM system 100 according to the embodiments of this application. The data processing apparatus 800 may include modules configured to perform the method performed by the SLAM system 100 in the data processing method 200 in FIG. 2. Moreover, the modules in the data processing apparatus 800 and the foregoing and other operations and/or functions are respectively used for implementing corresponding procedures in the data processing method 200 in FIG. 2. Specific processes of performing the corresponding steps by the modules are described in detail in the method 200. For brevity, details are not described herein again.

An embodiment of this application further provides a computer readable storage medium. The computer readable storage medium includes a computer program. When the computer program is run on a computer, the computer is enabled to perform the method provided in the foregoing method embodiment.

An embodiment of this application further provides a computer program product including an instruction. When the computer program product is run on a computer, the computer is enabled to perform the method provided in the foregoing method embodiment.

It should be understood that the processor in the embodiments of this application may be a central processing unit (central processing unit, CPU), or the processor may be another general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general purpose processor may be a microprocessor, or the processor may be any conventional processor or the like.

It should be further understood that the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that units and algorithm steps in examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It may be clearly understood by a person skilled in the art that, for the purpose of ease and brevity of description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements, to achieve the objectives of the solutions in the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The scope of protection shall be defined by the appended claims.

## Claims

1. A data processing method, comprising:

obtaining (210) a state vector set of an intelligent device, wherein the state vector set comprises at least one pose vector of the intelligent device and/or at least one landmark characteristic vector of an environment in which the intelligent device is located, and the at least one pose vector and/or the at least one landmark characteristic vector are/is used to locate the intelligent device and map the environment in which the intelligent device is located;

determining (220) a first linearized constraint equation, wherein the first linearized constraint equation is a linearized constraint representation of the at least one pose vector and/or the at least one landmark characteristic vector;

determining (230) a first state vector, wherein the first state vector is a to-be-marginalized state vector in the state vector set;

marginalizing (240) the first state vector in the first linearized constraint equation to obtain a second linearized constraint equation, wherein the second linearized constraint equation represents a linearized constraint relationship of second state vectors, and the second state vector is a state vector other than the first state vector in the state vector set;

determining (250) an objective function for maximum likelihood estimation of the state vector based on the second linearized constraint equation; and

optimizing (260) the at least one pose vector and/or the at least one landmark characteristic vector based on the objective function, to output a track of the intelligent device and a map of the environment in which the intelligent device is located;

the method **characterized in**: determining an information matrix $\Sigma$ based on the objective function, wherein the information matrix is used to optimize and update the second state vector; and constructing a new constraint term based on the optimized and updated second state vector, wherein the constraint term is used to constrain a linearized constraint equation established during next data processing; and

performing graph optimization on the second state vector and updating the second state vector as

$$\overset{\wedge}{X}{}^{\oplus}_{u} = \overset{\sim}{X}_{u} + \overset{\wedge}{X}_{u}$$, and constructing a prior constraint for next graph optimization based on the obtained information matrix, wherein the prior constraint is added to an entire pose graph as a new constraint for next data processing, wherein the prior constraint is:

$$\left\| X_u - \overset{\wedge}{X}{}^{\oplus}_{u} \right\|^2_{\Sigma^{-1}}$$

wherein $\overset{\sim}{x}_u$ is an error vector of a to-be-preserved state vector, $\overset{\wedge}{x}_u$ is a previous estimate of the to-be-preserved state vector, and $\overset{\wedge}{X}{}^{\oplus}_{u}$ is an updated estimate of the to-be-preserved state vector.

2. The method according to claim 1, wherein the marginalizing the first state vector in the first linearized constraint equation to obtain a second linearized constraint equation comprises:
marginalizing the first state vector in the first linearized constraint equation based on a null space of a Jacobian matrix of the first state vector, to obtain the second linearized constraint equation.

3. The method according to claim 2, wherein the marginalizing the first state vector in the first linearized constraint equation based on a null space of a Jacobian matrix of the first state vector, to obtain the second linearized constraint equation comprises:

determining the Jacobian matrix of the first state vector;
determining a left null space of the Jacobian matrix of the first state vector based on the Jacobian matrix of the first state vector; and
left-multiplying the left null space of the Jacobian matrix of the first state vector by the first linearized constraint equation to obtain the second linearized constraint equation.

**4.** The method according to claim 2 or 3, wherein the second linearized constraint equation is:

$$U_m^{\mathrm{T}}\tilde{z} \approx U_m^{\mathrm{T}}H_u\tilde{x}_u + U_m^{\mathrm{T}}n,$$

wherein
$\tilde{x}_u$ is an error vector of the second state vector, $H_u$ is a Jacobian matrix of the second state vector, $U_m$ is the null space of the Jacobian matrix of the first state vector, $\tilde{z}$ is a residual vector of an observed vector, and $n$ is a white Gaussian noise vector.

**5.** The method according to any one of claims 1 to 4, wherein before the marginalizing the first state vector in the first linearized constraint equation to obtain a second linearized constraint equation, the method further comprises:
rearranging the first linearized constraint equation based on the first state vector, wherein the first state vector in the rearranged first linearized constraint equation is separated from the second state vector in the rearranged first linearized constraint equation.

**6.** The method according to claim 5, wherein the rearranged first linearized constraint equation is:

$$\tilde{z} \approx H_u\tilde{x}_u + H_m\tilde{x}_m + n,$$

wherein
$\tilde{x}_u$ is the error vector of the second state vector, $\tilde{x}_m$ is an error vector of the first state vector, $H_m$ is the Jacobian matrix of the first state vector, $H_u$ is the Jacobian matrix of the second state vector, $\tilde{z}$ is the residual vector of the observed vector, and $n$ is the white Gaussian noise vector.

**7.** The method according to any one of claims 1 to 6, wherein before the determining a first linearized constraint equation, the method further comprises:

determining a nonlinearized constraint equation of the at least one pose vector and/or the at least one landmark characteristic vector; and
linearizing the nonlinearized constraint equation based on a Jacobian matrix of the at least one pose vector and/or the at least one landmark characteristic vector, to obtain the first linearized constraint equation.

**8.** A data processing apparatus, comprising:

an obtaining unit (710), configured to obtain a state vector set of an intelligent device, wherein the state vector set comprises at least one pose vector of the intelligent device and/or at least one landmark characteristic vector of an environment in which the intelligent device is located, and the at least one pose vector and/or the at least one landmark characteristic vector are/is used to locate the intelligent device and map the environment in which the intelligent device is located;
a determining unit (720), configured to determine a first linearized constraint equation, wherein the first linearized constraint equation is a linearized constraint representation of the at least one pose vector and/or the at least one landmark characteristic vector, wherein
the determining unit is further configured to determine a first state vector, wherein the first state vector is a to-be-marginalized state vector in the state vector set;
a marginalization unit (730), configured to marginalize the first state vector in the first linearized constraint equation to obtain a second linearized constraint equation, wherein the second linearized constraint equation represents a linearized constraint relationship of second state vectors, and the second state vector is a state vector other than the first state vector in the state vector set, wherein
the determining unit is further configured to determine an objective function for maximum likelihood estimation of the state vector based on the second linearized constraint equation; and
an optimization unit (740), configured to optimize the at least one pose vector and/or the at least one landmark characteristic vector based on the objective function, to output a track of the intelligent device and a map of the environment in which the intelligent device is located;
**characterized in that** the determining unit is further configured to: determine an information matrix $\Sigma$ based on the objective function, wherein the information matrix is used to optimize and update the second state vector; and constructing a new constraint term based on the optimized and updated second state vector, wherein the constraint term is used to constrain a linearized constraint equation established during next data processing; and perform graph optimization on the second state vector and updating the second state vector as

$$\hat{X}_{II}^{\oplus} = \tilde{X}_{II} + \hat{X}_{II} ,$$

, and construct a prior constraint for next graph optimization based on the obtained information matrix, wherein the prior constraint is added to an entire pose graph as a new constraint for next data processing, wherein the prior constraint is:

$$\left\| X_u - \hat{X}_u^{\oplus} \right\|_{\Sigma^{-1}}^2$$

wherein $\tilde{x}_u$ is an error vector of a to-be-preserved state vector, $x_u$ is a previous estimate of the to-be-preserved state vector, and $\hat{X}_u^{\oplus}$ is an updated estimate of the to-be-preserved state vector.

9. The apparatus according to claim 8, wherein the marginalization unit is specifically configured to marginalize the first state vector in the first linearized constraint equation based on a null space of a Jacobian matrix of the first state vector, to obtain the second linearized constraint equation.

10. The apparatus according to claim 9, wherein the marginalization unit is specifically configured to:

determine the Jacobian matrix of the first state vector;
determine a left null space of the Jacobian matrix of the first state vector based on the Jacobian matrix of the first state vector; and
left-multiply the left null space of the Jacobian matrix of the first state vector by the first linearized constraint equation to obtain the second linearized constraint equation.

11. The apparatus according to claim 9 or 10, wherein the second linearized constraint equation is:

$$U_m^{\mathrm{T}}\tilde{z} \approx U_m^{\mathrm{T}}H_u\tilde{x}_u + U_m^{\mathrm{T}}n ,$$

wherein
$\tilde{x}_u$ is an error vector of the second state vector, $H_u$ is a Jacobian matrix of the second state vector, $U_m$ is the null space of the Jacobian matrix of the first state vector, $\tilde{z}$ is a residual vector of an observed vector, and $n$ is a white Gaussian noise vector.

12. The apparatus according to any one of claims 8 to 11, wherein the apparatus further comprises:
a rearrangement unit, configured to rearrange the first linearized constraint equation based on the first state vector, wherein the first state vector in the rearranged first linearized constraint equation is separated from the second state vector in the rearranged first linearized constraint equation.

13. The apparatus according to claim 12, wherein the rearranged first linearized constraint equation is:

$$\tilde{z} \approx H_u \tilde{x}_u + H_m \tilde{x}_m + n,$$

wherein

$\tilde{x}_u$ is the error vector of the second state vector, $\tilde{x}_m$ is an error vector of the first state vector, $H_m$ is the Jacobian matrix of the first state vector, $H_u$ is the Jacobian matrix of the second state vector, $\tilde{z}$ is the residual vector of the observed vector, and $n$ is the white Gaussian noise vector.

14. The apparatus according to any one of claims 8 to 13, wherein the determining unit is further configured to:

determine a nonlinearized constraint equation of the at least one pose vector and/or the at least one landmark characteristic vector; and
linearize the nonlinearized constraint equation based on a Jacobian matrix of the at least one pose vector and/or the at least one landmark characteristic vector, to obtain the first linearized constraint equation.

15. A computer readable storage medium, comprising a computer program, wherein when the computer program is run on a computer, the computer is enabled to perform the data processing method according to any one of claims 1 to 7.

**Patentansprüche**

1. Datenverarbeitungsverfahren, umfassend:

Erhalten (210) eines Zustandsvektorsatzes einer intelligenten Vorrichtung, wobei der Zustandsvektorsatz mindestens einen Lagenvektor der intelligenten Vorrichtung und/oder mindestens einen Orientierungspunktmerkmalsvektor einer Umgebung, in der sich die intelligente Vorrichtung befindet, umfasst und der mindestens eine Lagenvektor und/oder der mindestens eine Orientierungspunktmerkmalsvektor verwendet wird/werden, um die Position der intelligenten Vorrichtung zu bestimmen und die Umgebung, in der sich die intelligente Vorrichtung befindet, abzubilden;
Bestimmen (220) einer ersten linearisierten Einschränkungsgleichung, wobei die erste linearisierte Einschränkungsgleichung eine linearisierte Einschränkungsdarstellung des mindestens einen Lagenvektors und/oder des mindestens einen Orientierungspunktmerkmalsvektors ist;
Bestimmen (230) eines ersten Zustandsvektors, wobei der erste Zustandsvektor ein zu marginalisierender Zustandsvektor in dem Zustandsvektorsatz ist;
Marginalisieren (240) des ersten Zustandsvektors in der ersten linearisierten Einschränkungsgleichung, um eine zweite linearisierte Einschränkungsgleichung zu erhalten, wobei die zweite linearisierte Einschränkungsgleichung eine linearisierte Einschränkungsbeziehung zweiter Zustandsvektoren darstellt und der zweite Zustandsvektor ein anderer Zustandsvektor als der erste Zustandsvektor in dem Zustandsvektorsatz ist;
Bestimmen (250) einer Zielfunktion zur Schätzung der maximalen Wahrscheinlichkeit des Zustandsvektors auf Grundlage der zweiten linearisierten Einschränkungsgleichung; und
Optimieren (260) des mindestens einen Lagenvektors und/oder des mindestens einen Orientierungspunktmerkmalsvektors auf Grundlage der Zielfunktion, um eine Nachverfolgung der intelligenten Vorrichtung und eine Abbildung der Umgebung, in der sich die intelligente Vorrichtung befindet, auszugeben;
wobei das Verfahren durch Folgendes gekennzeichnet ist:

Bestimmen einer Informationsmatrix $\Sigma$ auf Grundlage der Zielfunktion, wobei die Informationsmatrix verwendet wird, um den zweiten Zustandsvektor zu optimieren und zu aktualisieren; und Aufstellen eines neuen Einschränkungsterms auf Grundlage des optimierten und aktualisierten zweiten Zustandsvektors, wobei der Einschränkungsterm verwendet wird, um eine während einer nächsten Datenverarbeitung erstellte linearisierte Einschränkungsgleichung einzuschränken; und
Durchführen einer Graphoptimierung an dem zweiten Zustandsvektor und Aktualisieren des zweiten Zustandsvektors als $\hat{X}_u^{\oplus} = \tilde{X}_u + \hat{X}_u$ und Aufstellen einer vorherigen Einschränkung für die nächste Graphoptimierung auf Grundlage der erhaltenen Informationsmatrix, wobei die vorherige Einschränkung als neue Einschränkung für die nächste Datenverarbeitung zu einem gesamten Lagengraph hinzugefügt wird, wobei es sich bei der vorherigen Einschränkung um Folgendes handelt:

$$\left\| \tilde{X}_u - \hat{X}_u^{\oplus} \right\|_{\Sigma^{-1}}^2$$

wobei $\tilde{X}_u$ ein Fehlervektor eines zu bewahrenden Zustandsvektors ist, $\hat{X}_u$ eine vorherige Schätzung des zu bewahrenden Zustandsvektors ist und $\hat{X}_u^{\oplus}$ eine aktualisierte Schätzung des zu bewahrenden Zustandsvektors ist.

2. Verfahren nach Anspruch 1, wobei das Marginalisieren des ersten Zustandsvektors in der ersten linearisierten Einschränkungsgleichung zum Erhalten einer zweiten linearisierten Einschränkungsgleichung Folgendes umfasst:

Marginalisieren des ersten Zustandsvektors in der ersten linearisierten Einschränkungsgleichung auf Grundlage eines Nullraum einer Jacobi-Matrix des ersten Zustandsvektors, um die zweite linearisierte Einschränkungsgleichung zu erhalten.

3. Verfahren nach Anspruch 2, wobei das Marginalisieren des ersten Zustandsvektors in der ersten linearisierten Einschränkungsgleichung auf Grundlage eines Nullraums einer Jacobi-Matrix des ersten Zustandsvektors zum Erhalten der zweiten linearisierten Einschränkungsgleichung Folgendes umfasst:

Bestimmen der Jacobi-Matrix des ersten Zustandsvektors;
Bestimmen eines linken Nullraums der Jacobi-Matrix des ersten Zustandsvektors auf Grundlage der Jacobi-Matrix des ersten Zustandsvektors; und
Linksmultiplizieren des linken Nullraums der Jacobi-Matrix des ersten Zustandsvektors mit der ersten linearisierten Einschränkungsgleichung, um die zweite linearisierte Einschränkungsgleichung zu erhalten.

4. Verfahren nach Anspruch 2 oder 3, wobei es sich bei der zweiten linearisierten Einschränkungsgleichung um Folgendes handelt:

$$U_m^T \tilde{Z} \approx U_m^T H_u \tilde{X}_u + U_m^T n,$$

wobei
$\tilde{X}_u$ ein Fehlervektor des zweiten Zustandsvektors ist, $H_u$ eine Jacobi-Matrix des zweiten Zustandsvektors ist, $U_m$ der Nullraum der Jacobi-Matrix des ersten Zustandsvektors ist, $\tilde{Z}$ ein Restvektor eines beobachteten Vektors ist, und n ein weißer Gaußscher Rauschvektor ist.

5. Verfahren nach einem der Ansprüche 1 bis 4, wobei das Verfahren vor dem Marginalisieren des ersten Zustandsvektors in der ersten linearisierten Einschränkungsgleichung zum Erhalten einer zweiten linearisierten Einschränkungsgleichung ferner Folgendes umfasst:

Umordnen der ersten linearisierten Einschränkungsgleichung auf Grundlage des ersten Zustandsvektors, wobei der erste Zustandsvektor in der umgeordneten ersten linearisierten Einschränkungsgleichung von dem zweiten Zustandsvektor in der umgeordneten ersten linearisierten Einschränkungsgleichung getrennt ist.

6. Verfahren nach Anspruch 5, wobei es sich bei der umgeordneten ersten linearisierten Einschränkungsgleichung um Folgendes handelt:

$$\tilde{Z} \approx H_u \tilde{X}_u + H_m \tilde{X}_m + n,$$

wobei
$\tilde{X}_u$ der Fehlervektor des zweiten Zustandsvektors ist, $\tilde{X}_m$ ein Fehlervektor des ersten Zustandsvektors ist, $H_m$ die Jacobi-Matrix des ersten Zustandsvektors ist, $H_u$ die Jacobi-Matrix des zweiten Zustandsvektors ist, $\tilde{Z}$ der Restvektor des beobachteten Vektors ist und n der weiße Gaußsche Rauschvektor ist.

7. Verfahren nach einem der Ansprüche 1 bis 6, wobei das Verfahren vor dem Bestimmen einer ersten linearisierten Einschränkungsgleichung ferner Folgendes umfasst:

Bestimmen einer nichtlinearisierten Einschränkungsgleichung des mindestens einen Lagenvektors und/oder des mindestens einen Orientierungspunktmerkmalsvektors; und
Linearisieren der nichtlinearisierten Einschränkungsgleichung auf Grundlage einer Jacobi-Matrix des mindestens einen Lagenvektors und/oder des mindestens einen Orientierungspunktmerkmalsvektor, um die erste linearisierte Einschränkungsgleichung zu erhalten.

8. Datenverarbeitungsvorrichtung, umfassend:

eine Erhaltungseinheit (710), die dazu konfiguriert ist, einen Zustandsvektorsatz einer intelligenten Vorrichtung zu erhalten, wobei der Zustandsvektorsatz mindestens einen Lagenvektor der intelligenten Vorrichtung und/oder mindestens einen Orientierungspunktmerkmalsvektor einer Umgebung, in der sich die intelligente Vorrichtung befindet, umfasst und der mindestens eine Lagenvektor und/oder der mindestens eine Orientierungspunktmerkmalsvektor verwendet wird/werden, um die Position der intelligenten Vorrichtung zu bestimmen und die Umgebung, in der sich die intelligente Vorrichtung befindet, abzubilden;
eine Bestimmungseinheit (720), die dazu konfiguriert ist, eine erste linearisierte Einschränkungsgleichung zu bestimmen, wobei die erste linearisierte Einschränkungsgleichung eine linearisierte Einschränkungsdarstellung des mindestens einen Lagenvektors und/oder des mindestens einen Orientierungspunktmerkmalsvektors ist, wobei
die Bestimmungseinheit ferner dazu konfiguriert ist, einen ersten Zustandsvektor zu bestimmen, wobei der erste Zustandsvektor ein zu marginalisierender Zustandsvektor in dem Zustandsvektorsatz ist;
eine Marginalisierungseinheit (730), die dazu konfiguriert ist, den ersten Zustandsvektor in der ersten linearisierten Einschränkungsgleichung zu marginalisieren, um eine zweite linearisierte Einschränkungsgleichung zu erhalten, wobei die zweite linearisierte Einschränkungsgleichung eine linearisierte Einschränkungsbeziehung zweiter Zustandsvektoren darstellt und der zweite Zustandsvektor ein anderer Zustandsvektor als der erste Zustandsvektor in dem Zustandsvektorsatz ist, wobei
die Bestimmungseinheit ferner dazu konfiguriert ist, eine Zielfunktion zur Schätzung der maximalen Wahrscheinlichkeit des Zustandsvektors auf Grundlage der zweiten linearisierten Einschränkungsgleichung zu bestimmen; und
eine Optimierungseinheit (740), die dazu konfiguriert ist, den mindestens einen Lagenvektor und/oder den mindestens einen Orientierungspunktmerkmalsvektors auf Grundlage der Zielfunktion zu optimieren, um eine Nachverfolgung der intelligenten Vorrichtung und eine Abbildung der Umgebung, in der sich die intelligente Vorrichtung befindet, auszugeben;
**dadurch gekennzeichnet, dass** die Bestimmungseinheit ferner für Folgendes konfiguriert ist:

Bestimmen einer Informationsmatrix $\Sigma$ auf Grundlage der Zielfunktion, wobei die Informationsmatrix verwendet wird, um den zweiten Zustandsvektor zu optimieren und zu aktualisieren; und Aufstellen eines neuen Einschränkungsterms auf Grundlage des optimierten und aktualisierten zweiten Zustandsvektors, wobei der Einschränkungsterm verwendet wird, um eine während einer nächsten Datenverarbeitung erstellte linearisierte Einschränkungsgleichung einzuschränken; und

Durchführen einer Graphoptimierung an dem zweiten Zustandsvektor und Aktualisieren des zweiten Zustandsvektors als $\hat{X}_u^{\oplus} = \tilde{X}_u + \hat{X}_u$ und Aufstellen einer vorherigen Einschränkung für die nächste Graphoptimierung auf Grundlage der erhaltenen Informationsmatrix, wobei die vorherige Einschränkung als neue Einschränkung für die nächste Datenverarbeitung zu einem gesamten Lagengraph hinzugefügt wird, wobei es sich bei der vorherigen Einschränkung um Folgendes handelt:

$$\left\| X_u - \hat{X}_u^{\oplus} \right\|_{\Sigma^{-1}}^2$$

wobei $\tilde{X}_u$ ein Fehlervektor eines zu bewahrenden Zustandsvektors ist, $\tilde{X}_u$ eine vorherige Schätzung des zu bewahrenden Zustandsvektors ist und $X_u^\oplus$ eine aktualisierte Schätzung des zu bewahrenden Zustandsvektors ist.

9. Vorrichtung nach Anspruch 8, wobei die Marginalisierungseinheit insbesondere dazu konfiguriert ist, den ersten Zustandsvektor in der ersten linearisierten Einschränkungsgleichung auf Grundlage eines Nullraums einer Jacobi-Matrix des ersten Zustandsvektors zu marginalisieren, um die zweite linearisierte Einschränkungsgleichung zu erhalten.

10. Vorrichtung nach Anspruch 9, wobei die Marginalisierungseinheit insbesondere für Folgendes konfiguriert ist:

Bestimmen der Jacobi-Matrix des ersten Zustandsvektors;
Bestimmen eines linken Nullraums der Jacobi-Matrix des ersten Zustandsvektors auf Grundlage der Jacobi-Matrix des ersten Zustandsvektors; und
Linksmultiplizieren des linken Nullraums der Jacobi-Matrix des ersten Zustandsvektors mit der ersten linearisierten Einschränkungsgleichung, um die zweite linearisierte Einschränkungsgleichung zu erhalten.

11. Vorrichtung nach Anspruch 9 oder 10, wobei es sich bei der zweiten linearisierten Einschränkungsgleichung um Folgendes handelt:

$$U_m^T \tilde{Z} \approx U_m^T H_u \tilde{X}_u + U_m^T n,$$

wobei
$\tilde{X}_u$ ein Fehlervektor des zweiten Zustandsvektors ist, $H_u$ eine Jacobi-Matrix des zweiten Zustandsvektors ist, $U_m$ der Nullraum der Jacobi-Matrix des ersten Zustandsvektors ist, $\tilde{Z}$ ein Restvektor eines beobachteten Vektors ist und n ein weißer Gaußscher Rauchvektor ist.

12. Vorrichtung nach einem der Ansprüche 8 bis 11, wobei die Vorrichtung ferner Folgendes umfasst:
eine Umordnungseinheit, die dazu konfiguriert ist, die erste linearisierte Einschränkungsgleichung auf Grundlage des ersten Zustandsvektors umzuordnen, wobei der erste Zustandsvektor in der umgeordneten ersten linearisierten Einschränkungsgleichung von dem zweiten Zustandsvektor in der umgeordneten ersten linearisierten Einschränkungsgleichung getrennt ist.

13. Vorrichtung nach Anspruch 12, wobei es sich bei der umgeordneten ersten linearisierten Einschränkungsgleichung um Folgendes handelt:

$$\tilde{Z} \approx H_u \tilde{X}_u + H_m \tilde{X}_m + n,$$

wobei
$\tilde{X}_u$ der Fehlervektor des zweiten Zustandsvektors ist, $\tilde{X}_m$ ein Fehlervektor des ersten Zustandsvektors ist, $H_m$ die Jacobi-Matrix des ersten Zustandsvektors ist, $H_u$ die Jacobi-Matrix des zweiten Zustandsvektors ist, $\tilde{Z}$ der Restvektor des beobachteten Vektors ist und n der weiße Gaußsche Rauchvektor ist.

14. Vorrichtung nach einem der Ansprüche 8 bis 13, wobei die Bestimmungseinheit ferner für Folgendes konfiguriert ist:

Bestimmen einer nichtlinearisierten Einschränkungsgleichung des mindestens einen Lagenvektors und/oder des mindestens einen Orientierungspunktmerkmalsvektors; und
Linearisieren der nichtlinearisierten Einschränkungsgleichung auf Grundlage einer Jacobi-Matrix des mindestens einen Lagenvektors und/oder des mindestens einen Orientierungspunktmerkmalsvektors, um die erste linearisierte Einschränkungsgleichung zu erhalten.

15. Computerlesbares Speichermedium, das ein Computerprogramm umfasst, wobei, wenn das Computerprogramm auf einem Computer ausgeführt wird, der Computer dazu befähigt wird, das Datenverarbeitungsverfahren nach einem der Ansprüche 1 bis 7 durchzuführen.

**Revendications**

1. Procédé de traitement de données, comprenant :

l'obtention (210) d'un ensemble de vecteurs d'état d'un dispositif intelligent, dans lequel l'ensemble de vecteurs d'état comprend au moins un vecteur de pose du dispositif intelligent et/ou au moins un vecteur caractéristique de repère d'un environnement dans lequel se trouve le dispositif intelligent, et l'au moins un vecteur de pose et/ou l'au moins un vecteur caractéristique de repère est/sont utilisé(s) pour localiser le dispositif intelligent et cartographier l'environnement dans lequel se trouve l'appareil intelligent ;

la détermination (220) d'une première équation de contrainte linéarisée, dans lequel la première équation de contrainte linéarisée est une représentation de contrainte linéarisée de l'au moins un vecteur de pose et/ou de l'au moins un vecteur caractéristique de repère ;

la détermination (230) d'un premier vecteur d'état, dans lequel le premier vecteur d'état est un vecteur d'état à marginaliser dans l'ensemble de vecteurs d'état ;

la marginalisation (240) du premier vecteur d'état dans la première équation de contrainte linéarisée pour obtenir une seconde équation de contrainte linéarisée, dans lequel la seconde équation de contrainte linéarisée représente une relation de contrainte linéarisée de seconds vecteurs d'état, et le second vecteur d'état est un vecteur d'état autre que le premier vecteur d'état dans l'ensemble de vecteurs d'état ;

la détermination (250) d'une fonction objective pour une estimation de probabilité maximale du vecteur d'état sur la base de la seconde équation de contrainte linéarisée ; et

l'optimisation (260) de l'au moins un vecteur de pose et/ou de l'au moins un vecteur caractéristique de repère sur la base de la fonction objective, pour émettre une trace du dispositif intelligent et une carte de l'environnement dans lequel se trouve le dispositif intelligent ;

le procédé **caractérisé par** :

la détermination d'une matrice d'informations $\Sigma$ sur la base de la fonction objective, dans lequel la matrice d'informations est utilisée pour optimiser et mettre à jour le second vecteur d'état ; et la construction d'un nouveau terme de contrainte sur la base du second vecteur d'état optimisé et mis à jour, dans lequel le terme de contrainte est utilisé pour contraindre une équation de contrainte linéarisée établie pendant le traitement de données suivant ; et

la réalisation d'une optimisation de graphe sur le second vecteur d'état et la mise à jour du second vecteur d'état en tant que $\hat{X}_u^{\oplus} = \tilde{X}_u + \hat{X}_u$ , et la construction d'une contrainte antérieure pour l'optimisation de graphe suivante sur la base de la matrice d'informations obtenue, dans lequel la contrainte antérieure est ajoutée à un graphe de pose entier en tant que nouvelle contrainte pour le traitement de données suivant, dans lequel la contrainte préalable est :

$$\left\| X_u - \hat{X}_u^{\oplus} \right\|_{\Sigma^{-1}}^2$$

où $\tilde{X}_u$ est un vecteur d'erreur d'un vecteur d'état à conserver, $\hat{X}_u$ est une estimation précédente du vecteur d'état à conserver, et $\hat{X}_u^{\oplus}$ est une estimation mise à jour du vecteur d'état à conserver.

2. Procédé selon la revendication 1, dans lequel la marginalisation du premier vecteur d'état dans la première équation de contrainte linéarisée pour obtenir une seconde équation de contrainte linéarisée comprend :

la marginalisation du premier vecteur d'état dans la première équation de contrainte linéarisée sur la base d'un espace nul d'une matrice jacobienne du premier vecteur d'état, pour obtenir la seconde équation de contrainte linéarisée.

3. Procédé selon la revendication 2, dans lequel la marginalisation du premier vecteur d'état dans la première équation de contrainte linéarisée sur la base d'un espace nul d'une matrice jacobienne du premier vecteur d'état, pour obtenir la seconde équation de contrainte linéarisée, comprend :

la détermination de la matrice jacobienne du premier vecteur d'état ;

la détermination d'un espace nul gauche de la matrice jacobienne du premier vecteur d'état sur la base de la matrice jacobienne du premier vecteur d'état ; et

la multiplication à gauche de l'espace nul gauche de la matrice jacobienne du premier vecteur d'état par la première équation de contrainte linéarisée pour obtenir la seconde équation de contrainte linéarisée.

4. Procédé selon la revendication 2 ou 3, dans lequel la seconde équation de contrainte linéarisée est :

$$U_m^T \tilde{Z} \approx U_m^T H_u \tilde{X}_u + U_m^T n,$$

où

$\tilde{X}_u$ est un vecteur d'erreur du second vecteur d'état, $H_u$ est une matrice jacobienne du second vecteur d'état, $U_m$ est l'espace nul de la matrice jacobienne du premier vecteur d'état, $\tilde{Z}$ est un vecteur résiduel d'un vecteur observé, et n est un vecteur de bruit blanc gaussien.

5. Procédé selon l'une quelconque des revendications 1 à 4, dans lequel, avant la marginalisation du premier vecteur d'état dans la première équation de contrainte linéarisée pour obtenir une seconde équation de contrainte linéarisée, le procédé comprend en outre :

la réorganisation de la première équation de contrainte linéarisée sur la base du premier vecteur d'état, dans lequel le premier vecteur d'état dans la première équation de contrainte linéarisée réorganisée est séparé du second vecteur d'état dans la première équation de contrainte linéarisée réorganisée.

6. Procédé selon la revendication 5, dans lequel la première équation de contrainte linéarisée réorganisée est :

$$\tilde{Z} \approx H_u \tilde{X}_u + H_m \tilde{X}_m + n,$$

où

$\tilde{X}_u$ est le vecteur d'erreur du second vecteur d'état, $\tilde{X}_m$ est un vecteur d'erreur du premier vecteur d'état, $H_m$ est la matrice jacobienne du premier vecteur d'état, $H_u$ est la matrice jacobienne du second vecteur d'état, $\tilde{Z}$ est le vecteur résiduel du vecteur observé, et n est le vecteur de bruit blanc gaussien.

7. Procédé selon l'une quelconque des revendications 1 à 6, dans lequel, avant la détermination d'une première équation de contrainte linéarisée, le procédé comprend en outre :

la détermination d'une équation de contrainte non linéarisée de l'au moins un vecteur de pose et/ou de l'au moins un vecteur caractéristique de repère ; et

la linéarisation de l'équation de contrainte non linéarisée sur la base d'une matrice jacobienne de l'au moins un vecteur de pose et/ou de l'au moins un vecteur caractéristique de repère, pour obtenir la première équation de contrainte linéarisée.

8. Appareil de traitement de données, comprenant :

une unité d'obtention (710), configurée pour obtenir un ensemble de vecteurs d'état d'un dispositif intelligent, dans lequel l'ensemble de vecteurs d'état comprend au moins un vecteur de pose du dispositif intelligent et/ou au moins un vecteur caractéristique de repère d'un environnement dans lequel se trouve le dispositif intelligent, et l'au moins un vecteur de pose et/ou l'au moins un vecteur caractéristique de repère est/sont utilisé(s) pour localiser le dispositif intelligent et cartographier l'environnement dans lequel se trouve le dispositif intelligent ; une unité de détermination (720), configurée pour déterminer une première équation de contrainte linéarisée, dans lequel la première équation de contrainte linéarisée est une représentation de contrainte linéarisée de l'au moins un vecteur de pose et/ou de l'au moins un vecteur caractéristique de repère, dans lequel l'unité de détermination est en outre configurée pour déterminer un premier vecteur d'état, dans lequel le premier vecteur d'état est un vecteur d'état à marginaliser dans l'ensemble de vecteurs d'état ; une unité de marginalisation (730), configurée pour marginaliser le premier vecteur d'état dans la première équation de contrainte linéarisée pour obtenir une seconde équation de contrainte linéarisée, dans lequel la seconde équation de contrainte linéarisée représente une relation de contrainte linéarisée de seconds vecteurs d'état, et le second vecteur d'état est un vecteur d'état autre que le premier vecteur d'état dans l'ensemble de vecteurs d'état, dans lequel

l'unité de détermination est en outre configurée pour déterminer une fonction objective pour une estimation de probabilité maximale du vecteur d'état sur la base de la seconde équation de contrainte linéarisée ; et

une unité d'optimisation (740), configurée pour optimiser l'au moins un vecteur de pose et/ou l'au moins un vecteur caractéristique de repère sur la base de la fonction objective, pour émettre une trace du dispositif intelligent et une carte de l'environnement dans lequel se trouve le dispositif intelligent ;

**caractérisé en ce que** l'unité de détermination est en outre configurée pour :

déterminer une matrice d'informations $\Sigma$ sur la base de la fonction objective, dans lequel la matrice d'informations est utilisée pour optimiser et mettre à jour le second vecteur d'état ; et la construction d'un nouveau terme de contrainte sur la base du second vecteur d'état optimisé et mis à jour, dans lequel le terme de contrainte est utilisé pour contraindre une équation de contrainte linéarisée établie pendant le traitement de données suivant ; et

réaliser une optimisation de graphe sur le second vecteur d'état et la mise à jour du second vecteur d'état en tant que $\hat{X}_u^{\oplus} = \tilde{X}_u + \hat{X}_u$, et construire une contrainte antérieure pour l'optimisation de graphe suivante sur la base de la matrice d'informations obtenue, dans lequel la contrainte antérieure est ajoutée à un graphe de pose entier en tant que nouvelle contrainte pour le traitement de données suivant, dans lequel la contrainte préalable est :

$$\left\| X_u - \hat{X}_u^{\oplus} \right\|_{\Sigma^{-1}}^2$$

où $\tilde{X}_u$ est un vecteur d'erreur d'un vecteur d'état à conserver, $X_u$ est une estimation précédente du vecteur d'état à conserver, et $X_u^{\oplus}$ est une estimation mise à jour du vecteur d'état à conserver.

9. Appareil selon la revendication 8, dans lequel l'unité de marginalisation est spécifiquement configurée pour marginaliser le premier vecteur d'état dans la première équation de contrainte linéarisée sur la base d'un espace nul d'une matrice jacobienne du premier vecteur d'état, pour obtenir la seconde équation de contrainte linéarisée.

10. Appareil selon la revendication 9, dans lequel l'unité de marginalisation est configurée spécifiquement pour :

déterminer la matrice jacobienne du premier vecteur d'état ;
déterminer un espace nul gauche de la matrice jacobienne du premier vecteur d'état sur la base de la matrice jacobienne du premier vecteur d'état ; et
multiplier à gauche l'espace nul gauche de la matrice jacobienne du premier vecteur d'état par la première équation de contrainte linéarisée pour obtenir la seconde équation de contrainte linéarisée.

11. Appareil selon la revendication 9 ou 10, dans lequel la seconde équation de contrainte linéarisée est :

$$U_m^T \tilde{Z} \approx U_m^T H_u \tilde{X}_u + U_m^T n,$$

où
$\tilde{X}_u$ est un vecteur d'erreur du second vecteur d'état, $H_u$ est une matrice jacobienne du second vecteur d'état, $U_m$ est l'espace nul de la matrice jacobienne du premier vecteur d'état, $\tilde{Z}$ est un vecteur résiduel d'un vecteur observé, et n est un vecteur de bruit blanc gaussien.

12. Appareil selon l'une quelconque des revendications 8 à 11, dans lequel l'appareil comprend en outre :
une unité de réorganisation, configurée pour réorganiser la première équation de contrainte linéarisée sur la base du premier vecteur d'état, dans lequel le premier vecteur d'état dans la première équation de contrainte linéarisée réorganisée est séparé du second vecteur d'état dans la première équation de contrainte linéarisée réorganisée.

**13.** Appareil selon la revendication 12, dans lequel la première équation de contrainte linéarisée réorganisée est :

$$\tilde{Z} \approx H_u \tilde{X}_u + H_m \tilde{X}_m + n,$$

où

$\tilde{X}_u$ est le vecteur d'erreur du second vecteur d'état, $\tilde{X}_m$ est un vecteur d'erreur du premier vecteur d'état, $H_m$ est la matrice jacobienne du premier vecteur d'état, $H_u$ est la matrice jacobienne du second vecteur d'état, $\tilde{Z}$ est le vecteur résiduel du vecteur observé, et n est le vecteur de bruit blanc gaussien.

**14.** Appareil selon l'une quelconque des revendications 8 à 13, dans lequel l'unité de détermination est en outre configurée pour :

déterminer une équation de contrainte non linéarisée de l'au moins un vecteur de pose et/ou de l'au moins un vecteur caractéristique de repère ; et
linéariser l'équation de contrainte non linéarisée sur la base d'une matrice jacobienne de l'au moins un vecteur de pose et/ou de l'au moins un vecteur caractéristique de repère, pour obtenir la première équation de contrainte linéarisée.

**15.** Support de stockage lisible par ordinateur, comprenant un programme informatique, dans lequel, lorsque le programme informatique est exécuté sur un ordinateur, l'ordinateur est capable de mettre en œuvre le procédé de traitement de données selon l'une quelconque des revendications 1 à 7.

SLAM system 100

Front end
110

Back end
120

FIG. 1

200

| Obtain a state vector set | 210 |

| Determine a first linearized constraint equation | 220 |

| Determine a first state vector, where the first state vector is a to-be-marginalized state vector in the state vector set | 230 |

| Marginalize the first state vector in the first linearized constraint equation to obtain a second linearized constraint equation | 240 |

| Determine an objective function based on the second linearized constraint equation | 250 |

| Optimize at least one pose vector and/or at least one landmark characteristic vector based on the objective function, to output a track of an intelligent device and a map of an environment in which the intelligent device is located | 260 |

FIG. 2

300

| Determine a Jacobian matrix of a first state vector | 310 |

| Determine a left null space of the Jacobian matrix of the first state vector based on the Jacobian matrix of the first state vector | 320 |

| Left-multiply the left null space of the Jacobian matrix of the first state vector by a first linearized constraint equation to obtain a second linearized constraint equation | 330 |

FIG. 3

Method 400

410: Obtain a measured value from a sensor

420: Establish a nonlinearized constraint relationship between state vectors

440: Optimize an objective function

430: Perform marginalization based on a null space

FIG. 4

Null-space based marginalization method 500

510: Construct a
linearized constraint
equation

511: Determine a
to-be-marginalized
state vector

512: Construct and
rearrange the
linearized
constraint equation

520: Calculate a left
null space

530: Reduce an
objective function

531: Left-multiply
the null space by
the linearized
constraint equation

532: Construct a
reduced objective
function

FIG. 5

600

Visual sensor information ⟋601

Landmark characteristic
vector extraction ⟋602

Inertial sensor
information ⟋601

Establish a constraint
equation ⟋603

Determine a to-be-marginalized state vector ⟋604

Linearize the constraint equation ⟋605

Rearrange the constraint equation ⟋606

Calculate a left null space of a Jacobian
matrix of the to-be-marginalized state vector ⟋607

Marginalize the state vector ⟋608

Construct an objective function ⟋609

Perform graph
optimization ⟋610

Output a track and a map ⟋611

FIG. 6

**Calculation process of a Schur complement method**

| Step (step) | Operation | Complexity |
|---|---|---|
| Step SC1 | $H_x^T H_x$ | $O(m^3 n)$ |
| Step SC2 | $H_x^T H_f$ | $O(m^2 n^2)$ |
| Step SC3 | $H_f^T H_f$ | $O(mn^3)$ |
| Step SC4 | $(H_f^T H_f)^{-1}$ | $O(n^3)$ |
| Step SC5 | $H_x^T H_f (H_f^T H_f)^{-1}$ | $O(mn^2)$ |
| Step SC6 | $H_x^T H_f (H_f^T H_f)^{-1} H_f^T H_x$ | $O(m^2 n)$ |
| Step SC7 | $H_x^T H_x - H_x^T H_f (H_f^T H_f)^{-1} H_f^T H_x$ | $O(m)$ |

**Calculation process of a null space method**

| Step (step) | Operation | Complexity |
|---|---|---|
| Step NS1 | $U_n^T H_x$ | $O(mn)$ |
| Step NS2 | $(U_n^T H_x)^T U_n^T H_x$ | $O(m^3 n)$ |

FIG. 7

EP 3 677 978 B1

FIG. 8

FIG. 9

**REFERENCES CITED IN THE DESCRIPTION**

**Patent documents cited in the description**

- US 20140333741 A
- US 20160327395 A